# FASCICULE DE BREVET EUROPEEN

(11) **EP 2 861 406 B1**
(45) Date de publication et mention de la délivrance du brevet: **09.10.2019**
(21) Numéro de dépôt: 13727855.2
(22) Date de dépôt: 03.06.2013
(51) Int. Cl.: B29C 49/56, B29C 49/36, B29C 49/48

(54) **DISPOSITIF DE SOUFFLAGE DE RECIPIENTS**
VORRICHTUNG ZUM BLASFORMEN VON BEHÄLTERN
DEVICE FOR BLOWING VESSELS

(30) Priorité: 19.06.2012 FR 1255753
(43) Date de publication de la demande: 22.04.2015
(73) Titulaire: Serac Group, 72400 La Ferté-Bernard (FR)
(72) Inventeur: GRAFFIN, André, 60185 Chicago (US)
(74) Mandataire: Lavialle, Bruno François Stéphane
(86) Numéro de dépôt international: PCT/EP2013/061412
(87) Numéro de publication internationale: WO 2013/189729

(56) Documents cités:
- DE-A1-102005 034 541
- DE-U1-202004 017 530
- DE-U1-202004 017 530
- US-A1- 2010 203 185

## Description

La présente invention concerne un dispositif de soufflage de récipients. Un tel dispositif est généralement prévu pour être implanté dans une ligne de production d'emballages destinés à contenir notamment des produits liquides.

Un dispositif de soufflage comporte généralement un bâti et une plateforme montée pour pivoter sur le bâti autour d'un axe de rotation. La plateforme est pourvue sur sa périphérie d'organes de soufflage et de moules montés sous les organes de soufflage. Le dispositif comporte en outre des moyens de commande des moules entre un état ouvert et un état fermé, un transporteur de chargement de préformes dans chacun des moules et un transporteur d'évacuation des récipients soufflés sur la plateforme. Le chargement, le soufflage et l'évacuation sont effectués dans des zones de la plateforme qui sont parcourues successivement par chaque moule au cours de la rotation de la plateforme. Les transporteurs comprennent par exemple des étoiles de transfert et/ou des transporteurs rectilignes.

Il existe des moules constitués de deux parties mobiles articulées l'une à l'autre entre une position d'ouverture du moule et une position de fermeture du moule. Le maintien en position de fermeture est assuré au moyen d'une goupille de verrouillage qui est dimensionnée pour supporter, avec l'axe d'articulation des parties de moule, les efforts de soufflage.

Il existe également des moules comportant une partie fixe et une partie mobile articulée sur la partie fixe. Les moyens de commande de la partie mobile entre les positions de fermeture et d'ouverture comprennent deux biellettes reliées l'une à l'autre pour former une genouillère assurant également le maintien de la partie mobile en position de fermeture. La genouillère est reliée à la partie de moule mobile du côté de celle-ci opposé à l'axe d'articulation des parties de moule.

Le soufflage est réalisé à une pression de plusieurs dizaines de bars, classiquement quarante bars, qui engendre des efforts importants sur les moules, les articulations et les mécanismes de maintien du moule à l'état fermé. Les moules et les mécanismes de maintien comportent donc des pièces massives pour résister à ces efforts. Ces efforts contribuent néanmoins à une usure prématurée des articulations des parties mobiles des moules et des mécanismes de maintien, usure qui rend nécessaire de prévoir des dispositifs de rattrapage des jeux. L'usure est d'autant plus importante que les moyens de maintien en position de fermeture sont complexes et comptent un nombre important d'articulations.

La complexité des moyens de maintien influe donc sur les coûts de maintenance mais contribue également à l'encombrement et la masse globale de la plateforme, augmentant l'inertie de celle-ci. Les documents US2010203185 A1 et DE102005034541 divulguent des dispositifs de soufflage de récipients.

Un but de l'invention est de fournir un dispositif plus simple présentant une durée de vie plus importante.

A cet effet, on prévoit, selon l'invention, Un dispositif de soufflage de récipients, comportant un bâti et une plateforme montée pour pivoter sur le bâti autour d'un axe de rotation, la plateforme étant pourvue d'organes de soufflage et de moules qui sont montés sous les organes de soufflage et qui comprennent une partie de moule fixe et une partie de moule mobile déplaçable en pivotement par des moyens de commande entre une position d'ouverture et une position de fermeture de moule. Le dispositif comprend des organes de blocage des moules en état fermé, chaque organe de blocage comprend un arc-boutant qui est relié à la partie de moule mobile par au moins une biellette et qui est solidaire d'un arbre de pivotement monté sur la plateforme pour être mobile entre une position escamotée et une position de blocage dans laquelle l'arc-boutant est en contact avec une surface solidaire de la partie de moule mobile, l'arbre de pivotement étant positionné de telle manière qu'en position de blocage l'arc-boutant s'étende le long d'une direction d'application d'une résultante d'effort de soufflage repris par la partie de moule mobile.

Ainsi, l'effort de fermeture du moule est supporté par l'arc-boutant et repris par l'arbre de pivotement qui forme un élément de butée positionné de telle manière que l'arc-boutant soit aligné sur la direction d'application de la résultante des efforts de soufflage repris par la partie de moule mobile et que ladite résultante coupe l'axe de l'arbre de pivotement. Ceci permet une transmission maximale de l'effort de soufflage (et donc de l'effort de fermeture du moule), et directe vers l'élément de butée, sans engendrer de moment parasite sur l'arc-boutant et l'arbre de pivotement dont le dimensionnement peut dès lors être calculé de manière simple. Ceci permet en outre de limiter les efforts supportés par les articulations des parties de moule, ce qui permet d'augmenter leur durée de vie et d'alléger leur structure. L'arbre de pivotement de l'arc-boutant travaille en cisaillement de sorte que les efforts supportés par celui-ci sont facilement calculables, simplifiant encore le dimensionnement de l'arbre de pivotement. La biellette permet une synchronisation des mouvements de l'arc-boutant et de la partie de moule mobile et limite le risque de choc entre ces deux éléments. La biellette permet également la possibilité de prévoir une commande unique pour assurer le déplacement synchronisé de la partie de moule mobile et de l'arc-boutant.

Selon un mode de réalisation particulier, l'arc-boutant, la biellette, la partie de moule mobile et l'arbre de pivotement sont agencés de telle manière que l'arc-boutant soit en contact avec la surface de la partie de moule mobile au-delà d'une position d'alignement d'extrémités articulées de la bielle avec l'arbre de pivotement.

Ceci est par exemple obtenu en décalant l'articulation de la biellette par rapport à l'axe de l'arc-boutant. On s'assure ainsi de l'application de l'arc-boutant sur la partie de moule mobile sans forcer sur les articulations de la biellette et sans qu'un effort ne soit repris par la biellette lorsque l'arc-boutant est en position de blocage.

De préférence, la surface de la partie de moule mobile et la face de l'arc-boutant venant en appui de celle-ci sont inclinées pour éviter une interférence entre elles préalablement à l'arrivée en position de blocage.

Selon une caractéristique particulière, les parties de moule, l'arc-boutant, l'arbre de pivotement et au moins une partie des moyens de commandes sont montés dans un châssis fixé sur la plateforme.

Ainsi, le châssis va assurer la reprise des efforts de soufflage sans que ceux-ci ne soient transmis à la plateforme. Grâce au châssis, il est également constitué un module de moulage qui incorpore le moule et ses moyens de commande et qui est rapporté d'un bloc sur la plateforme. Les opérations de montage et de réglage des moules peuvent être réalisées en atelier, les modules de moulage étant ensuite montés sur l'installation. Ceci permet d'accélérer les changements de moules lors du passage de la fabrication d'une série de récipients à une autre dont les récipients ont des formes différentes, et limite le temps d'arrêt de l'installation. Il est en outre alors possible de prévoir une installation ayant des configurations différentes en ce qui concerne le nombre de module de moulage par exemple en fonction de l'encombrement des moules. Dans une configuration, la plate-forme comporte par exemple moitié moins de modules de moulage montés sous un organe de soufflage sur deux.

Avantageusement, l'arc-boutant a une hauteur sensiblement identique à une hauteur du moule.

L'effort de soufflage est donc repris par l'arc-boutant sur toute la hauteur de la partie de moule mobile, répartissant l'effort de manière homogène en limitant le risque d'apparition de zones de concentration de contraintes sources d'une usure prématurée de la partie de moule mobile et / ou de l'arc-boutant.

Selon une caractéristique particulière, la partie de moule fixe est montée sur un élément de mise en appui de la partie de moule fixe contre la partie de moule mobile et, de préférence, l'élément de mise en appui comprend un corps pourvu d'une chambre recevant, à coulissement selon une direction parallèle à la direction d'application de la résultante d'effort de soufflage, un piston soumis à une pression de soufflage, la partie de moule fixe étant solidaire en translation du piston.

La partie de moule fixe est ainsi plaquée sur la partie de moule mobile et vient mettre cette dernière fermement en appui contre l'arc-boutant. Cette mise en appui est obtenue de manière simple au moyen de la pression de soufflage, étant entendu que le piston a une section telle que l'effort résultant de l'application de la pression sur celle-ci est au moins supérieur à l'effort de soufflage s'exerçant sur le moule.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue schématique en élévation d'un dispositif conforme à l'invention,

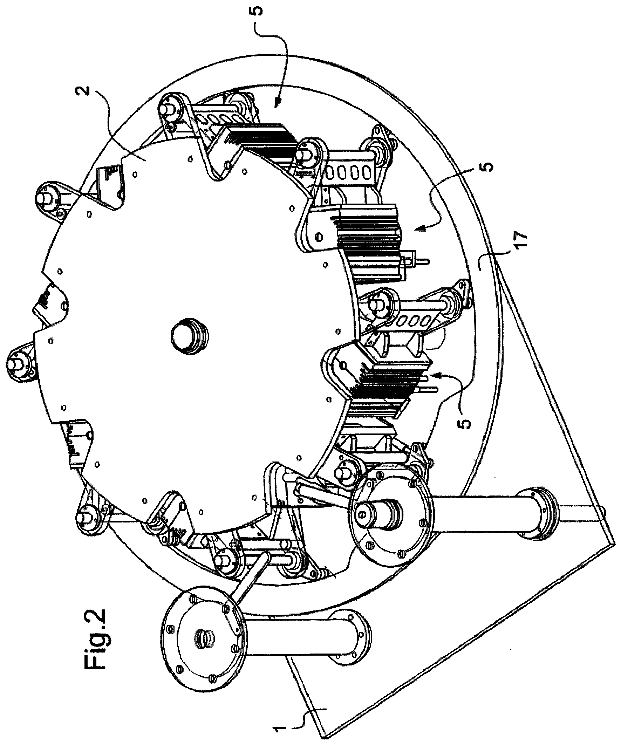

- la figure 2 est une vue schématique partielle, en perspective, de la plateforme de ce dispositif,
- la figure 3 est une vue de détail d'un module de moulage conforme à l'invention,
- la figure 4 est une vue partielle de dessus d'un module de moulage avec le moule ouvert,
- la figure 5 est une vue partielle de dessus d'un module de moulage avec le moule en cours de fermeture,
- la figure 6 est une vue partielle de dessus d'un module de moulage avec le moule fermé,

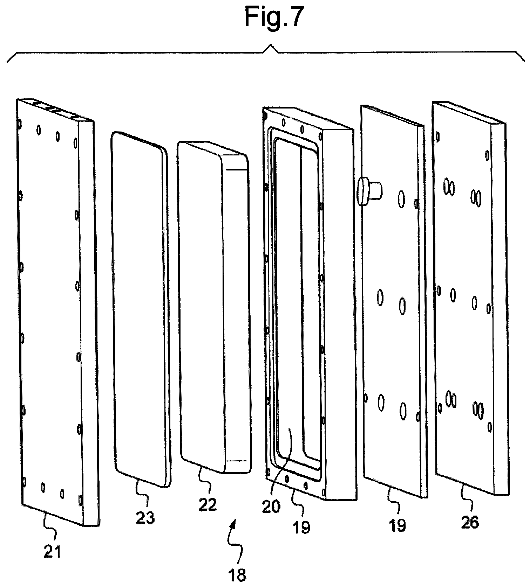

- la figure 7 est une vue schématique en perspective éclatée des moyens de mise en appui de la partie de moule fixe contre la partie de moule mobile,
- la figure 8 est une vue en perspective du module de moulage sans le moule avec les moyens de commande en position ouverte,
- la figure 9 est une vue en perspective du module de moulage sans le moule avec les moyens de commande en position fermée,
- la figure 10 une vue de dessous du module de moulage avec le moule en position fermée,
- la figure 11 est vue montrant en détail une partie des moyens de commande du moule alors que celui-ci arrive en position fermée,
- la figure 12 est une vue partielle en coupe axiale du moule en position fermée,
- la figure 13 est une vue partielle en perspective d'un module de moulage selon une variante de réalisation, le moule étant en position de fermeture.

Le dispositif de soufflage de récipients est ici destiné à la fabrication de bouteilles comportant un goulot fileté. Les bouteilles sont fabriquées à partir de préformes introduites dans des moules avant que de l'air ne soit soufflé à l'intérieur des préformes pour gonfler celles-ci et former le corps des bouteilles en plaquant la préforme contre la paroi du moule. Le procédé de soufflage est connu en lui-même et ne sera pas plus détaillé ici.

En référence aux figures, le dispositif de l'invention comporte un bâti 1 et une plateforme 2 montée pour pivoter sur le bâti 1 autour d'un axe de rotation 3.

La plateforme 2 est pourvue d'organes de soufflage 4 connus en eux-mêmes et de moules généralement désignés en 5 montés sous les organes de soufflage 4.

Chaque moule 5 comprend deux parties de moule, à savoir une partie de moule fixe 6 et une partie de moule mobile 7 et un fond 8. Chaque partie de moule 6, 7 comporte une empreinte correspondant à la moitié de la forme latérale extérieure du corps de la bouteille, le fond 8 comportant une empreinte correspondant au fond de la bouteille.

Les parties de moule 6, 7 sont montées entre une armature inférieure 9.1 et une armature supérieure 9.2 formant châssis et le fond 8 est monté sous l'armature inférieure 9.1. Les armatures 9.1, 9.2 sont horizontales et reliées entre elles par une colonne verticale 9.3 formant entretoise et par différents autres éléments mentionnés ci-après.

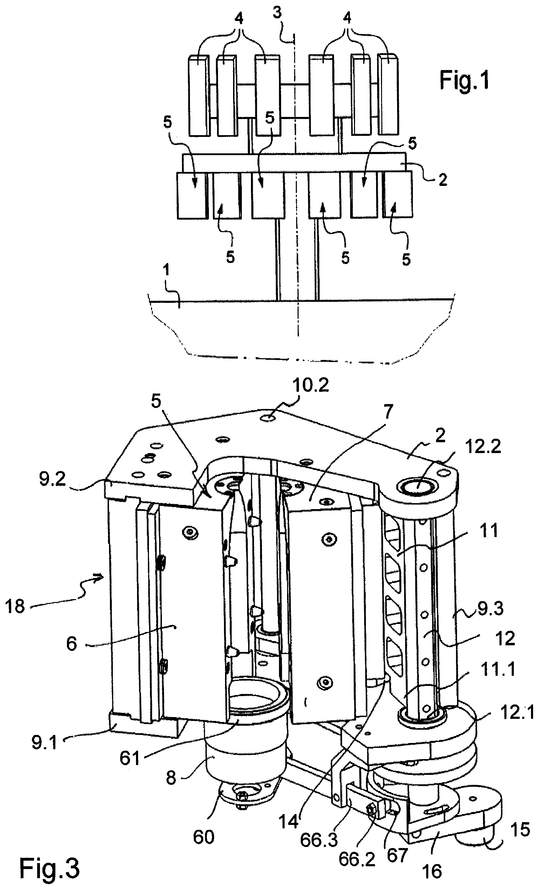

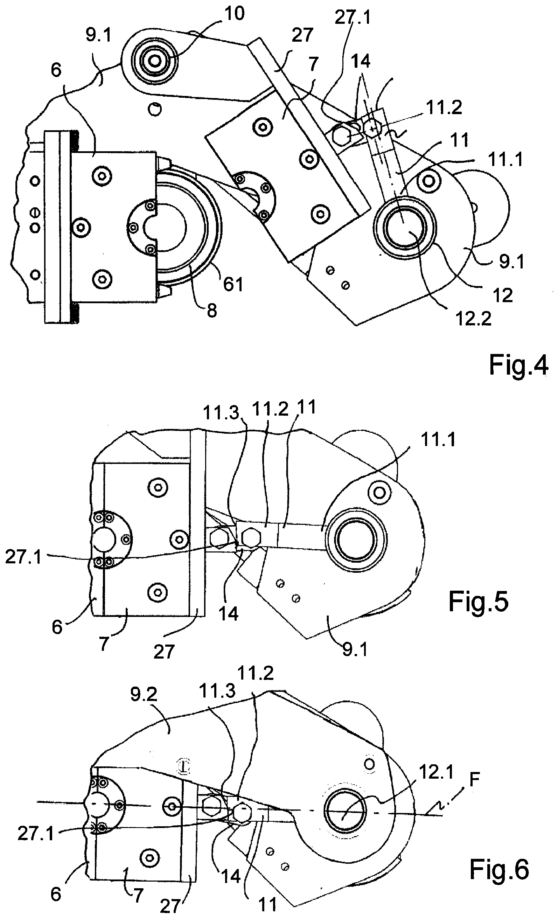

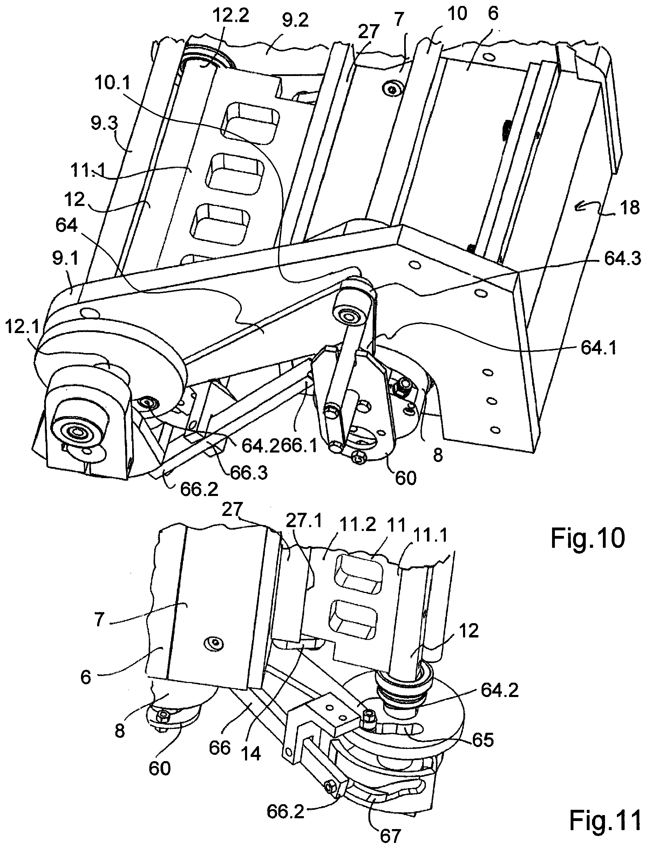

La partie de moule mobile 7 est solidaire d'un support 27 ayant un côté solidaire d'un arbre 10 ayant des portions d'extrémité inférieure et supérieure 10.1, 10.2 reçues à pivotement dans les armatures 9.1, 9.2 respectivement. La partie de moule mobile 7 pivote ainsi entre une position fermée (figures 6, 9, 11 et 12) dans laquelle elle s'étend en regard de la partie de moule fixe 6 et une position ouverte (figures 3, 4, et 8) dans laquelle elle est écartée de la partie de moule fixe 6 pour permettre l'introduction de la préforme dans le moule 5 et l'extraction de la bouteille soufflée hors du moule 5.

La partie de moule mobile 7 est associée à un organe de son blocage en position fermée. L'organe de blocage comprend un arc-boutant 11 ayant un côté 11.1 solidaire d'un arbre de pivotement 12 et un côté 11.2 relié à la partie de moule mobile 7 par des biellettes 14. L'arbre de pivotement 12 a une portion d'extrémité inférieure 12.1 et une portion d'extrémité supérieure 12.2 reçues à pivotement dans l'armature inférieure 9.1 et l'armature supérieure 9.2 respectivement. L'arc-boutant 11 est ainsi mobile entre une position escamotée (figures 3, 4 et 8) et une position de blocage (figures 6, 9, 10 et 11). Dans la position de blocage, l'arc-boutant 11 a une face 11.3 en appui contre une surface 27.1 du support 27 de la partie de moule mobile 7 et s'étend entre la partie de moule mobile 7 et l'arbre de pivotement 12 qui forme un élément de butée solidaire de la plateforme 2 positionné de telle manière que l'arc-boutant 11 en position de blocage s'étende le long d'une direction F (figure 6) d'application d'une résultante d'effort de soufflage repris par la partie de moule mobile 7. En position escamotée, l'arc-boutant 11 s'étend vers l'intérieur de la plateforme 2 selon une direction sensiblement radiale de ladite plateforme 2. L'arc-boutant 11 a une hauteur sensiblement égale à celle de la partie de moule mobile 7. On notera que le support 27 est agencé pour permettre l'appui de l'arc-boutant 11 et la reprise des efforts de soufflage par celui-ci.

On notera également que l'arc boutant 11, les biellettes 14, la partie de moule mobile 7 et l'arbre de pivotement 12 sont agencés de telle manière que la face 11.3 de l'arc-boutant 11 soit en contact avec la surface 7.1 de la partie de moule mobile 7 au-delà d'une position d'alignement des extrémités articulées des biellettes 14 avec l'arbre de pivotement 12 (voir en particulier la figure 6). En outre, la surface 27.1 de la partie de moule mobile 7 et la face 11.3 de l'arc-boutant 11 venant en appui de celle-ci sont légèrement inclinées pour faciliter le mouvement de l'arc-boutant de sa position de blocage vers sa position escamotée en limitant le risque d'une interférence entre ces surfaces. Ceci procure en outre une douceur de fonctionnement prévenant la survenance de chocs et de bruits lors du fonctionnement de l'installation.

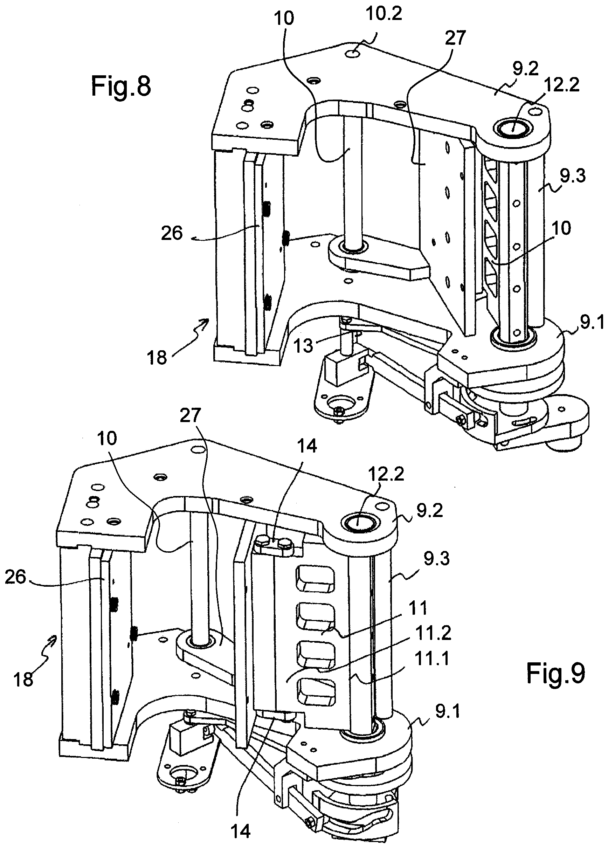

Le fond 8 de moule est monté sur support 60 monté pour coulisser le long d'une colonne 13 entre une position fermée dans laquelle le fond 8 est engagé entre les parties de moule 6, 7 (figures 9 à 12) et une position ouverte dans laquelle le fond 8 est dégagé des parties de moules 6, 7 (figures 3 et 8).

Le fond 8 est pourvu d'une butée 61 destinée à coopérer avec une butée 62, 63 s'étendant en saillie interne respectivement de la partie de moule fixe 6 et de la partie de moule mobile 7. La butée 61 est ici formée d'un rebord s'étendant en saillie externe du fond 8 et les butées 62, 63 sont formées d'un redan s'étendant en saillie interne des partie de moule 6, 7 pour supporter le rebord formant butée 61.

Le fond 8 de moule en position engagée est mobile horizontalement, lorsque la partie de moule mobile 7 est en position ouverte, entre une position de verrouillage dans laquelle la butée 61 du fond 8 est en engagement relatif avec les butées 62, 63 des parties de moule 6, 7 pour s'opposer à un déplacement du fond 8 en position dégagée, et une position de déverrouillage dans laquelle la butée 61 échappe aux butées 62, 63 autorisant un déplacement du fond 8 entre la position engagée et la position dégagée.

La plateforme 2 est pourvue de moyens de commande :
- des parties de moule mobiles 7 entre leur position fermée et leur position ouverte, et
- des arcs-boutants 11 entre leur position escamotée et leur position de blocage.

Les moyens de commande comprennent un galet 15 monté sur un maneton 16 solidaire de l'arbre de pivotement 12 de telle manière que le galet 15 coopère avec une came 17 fixe par rapport au bâti 1 et conformée pour amener la partie de moule mobile 7 et l'arc-boutant 11 dans leurs deux positions.

Plus précisément, le déplacement du galet 15 entraîne le pivotement de l'arbre de pivotement 12 et de l'arc-boutant 11 qui en est solidaire, ainsi que le déplacement de la partie de moule mobile 7 qui est entraînée via les biellettes 14 par l'arc-boutant 11. Les biellettes 14 assurent la synchronisation des mouvements de la partie de moule mobile 7 entre sa position ouverte et sa position fermée avec les mouvements de l'arc-boutant 11 entre sa position escamotée et sa position de blocage de telle manière que, lorsque la partie de moule mobile 7 arrive dans sa position fermée, l'arc-boutant 11 arrive immédiatement après dans sa position de blocage et que, lorsque l'arc-boutant 11 est amené vers sa position escamotée, la partie de moule mobile 7 est amenée vers sa position ouverte.

La came 17 est fixé sur le bâti 1 et s'étend autour de la plateforme 2 pour déplacer le maneton 15 dans ses positions correspondant aux positions escamotée et de blocage de l'arc-boutant 11, et donc dans les positions ouverte et fermée de la partie de moule mobile 7. La came 17 est agencée pour ouvrir les moules dans une zone de chargement des préformes dans les moules 5 et de déchargement des bouteilles soufflées hors des moules 5, et pour fermer et maintenir fermés les moules 5 lorsque, du fait de la rotation de la plateforme 2, les moules 5 ne sont plus dans la zone de chargement et de déchargement.

La plateforme 2 est pourvue de moyens de commande du fond 8 entre sa position ouverte et sa position fermée.

Le fond de moule est monté de façon excentrée sur le support 60 qui coulisse le long de la colonne 13. La colonne 13 est fixée à un levier coudé 64 de commande horizontale ayant une première extrémité 64.1 fixée au support 60, une partie intermédiaire 64.3 (au niveau du coude) montée sur l'extrémité inférieure 10.1 de l'axe 10 pour pivoter autour d'un axe sensiblement vertical, et une deuxième extrémité 64.2 pourvue d'un galet d'axe vertical reçu dans un chemin de came 65 lié en rotation à l'arbre de pivotement 12 de l'arc-boutant 11. Le chemin de came 65 est défini pour déplacer horizontalement la deuxième extrémité 64.2 de manière à déplacer le support 60 entre la position de verrouillage et la position de déverrouillage lorsque le fond de moule 8 est en position fermée et la partie de moule mobile 7 est en position ouverte.

Les moyens de commande comprennent en outre un levier 66 de commande verticale du fond de moule 8. Le levier 66 a une extrémité 66.1 articulée au support 60 du fond de moule 8 et une extrémité 66.2 pourvue d'un galet d'axe horizontal reçu dans un chemin de came 67 lié en rotation à l'arbre de pivotement 12 de l'arc-boutant 11. Le chemin de came 67 est défini de telle manière que, lorsque l'arc-boutant 11 est dans sa position escamotée, le fond de moule 8 est dans sa position ouverte et, lorsque l'arc-boutant 11 est dans sa position de blocage, le fond de moule 8 est dans sa position fermée.

Les chemins de came 65 et 67 sont positionnés angulairement l'un par rapport à l'autre sur l'arbre 12 de telle manière que :
- lors d'un déplacement de l'arc-boutant 11 de sa position escamotée vers sa position de blocage, le fond de moule 8 soit amené en position fermée puis en position verrouillée avant que l'arc-boutant 11 arrive en position de blocage et la partie de moule mobile 7 en position de fermeture ;
- lors d'un déplacement de l'arc-boutant 11 de sa position de blocage vers sa position escamotée, l'arc-boutant 11 quitte sa position de blocage et la partie de moule mobile 7 quitte sa position de fermeture avant que le fond de moule 8 soit amené en position déverrouillée puis en position ouverte.

La partie de moule fixe 6 est montée sur un élément, généralement désigné en 18, de mise en appui de la partie de moule fixe 6 contre la partie de moule mobile 7. L'élément de mise en appui 18 est monté entre les armatures 9.1, 9.2 qu'il contribue à entretoiser et comprend un corps 19 délimitant une chambre 20 qui est fermé à une extrémité par un fond 21 et qui reçoit à coulissement un piston 22 sur lequel est fixée une platine 26 de fixation de la partie de moule fixe 6. La direction de coulissement du piston 22 est parallèle à la direction d'application de la résultante d'effort de soufflage et la partie de moule fixe 6 est solidaire en translation du piston 22. Le fond 21 a des bords supérieur et inférieur reçus dans des rainures ménagées dans les armatures supérieure 9.2 et inférieure 9.1. Entre le corps 19 et le fond 21 s'étend une membrane 23, élastiquement déformable, dont un bord périphérique est pincé entre le corps 19 et le fond 21. Le fond 21 est percé d'un canal d'introduction d'air à la pression de soufflage entre le fond 21 et la membrane 23 de telle manière que l'air provoque un déplacement de la membrane 23 et du piston 21, et donc de la partie de moule fixe 6. Le canal d'introduction est relié par une conduite à la source d'air de soufflage alimentant chaque organe de soufflage 4.

En fonctionnement, la plateforme 2 étant en rotation, le moule 5 est ouvert en regard d'un organe d'amenée d'une préforme dans le moule 5 puis, une fois la préforme chargée dans le moule 5, la came 17 provoque la fermeture du moule 5 en amenant le fond de moule 8 en position de fermée et verrouillée, la partie de moule mobile 7 en position de fermeture, et l'arc-boutant 11 dans sa position de blocage. Les mouvements des parties de moule mobile 7 entre l'état ouvert et l'état fermé et les mouvements des fonds 8 entre leur position ouverte et déverrouillée et leur position fermée et verrouillée sont bien évidemment synchronisés.

L'air de soufflage est alors introduit dans le moule 5 et simultanément entre la membrane 23 et le fond 21. L'air de soufflage va alors provoquer :
- le déplacement du piston 22 qui va plaquer la partie de moule fixe 6 contre la partie de moule mobile 7 bloquée par l'arc-boutant 11 (assurant la mise en contact étroit des surfaces 27.1 et 11.3) ;
- le gonflage de la préforme dont la paroi va se plaquer contre la paroi interne du moule 5.

On notera que la course du piston 22 est faible puisque le piston 22 a pour fonction d'éliminer les jeux entre la partie de moule fixe 6 et la partie de moule mobile 7, et entre la partie de moule mobile 7 et l'arc-boutant 11.

Le soufflage se termine lorsque le moule 5 revient en zone de chargement et déchargement. La pression de soufflage est au préalable coupée. La came 17 commande alors l'escamotage de l'arc-boutant 11 et l'ouverture du moule 5. Une pince 24 montée à l'extrémité d'un bras 25 vient ensuite chercher la bouteille soufflée. Le bras 25 est guidé pour faire faire à la pince 24 un mouvement de dégagement permettant de sortir la bouteille soufflée du moule 5 ouvert sans interférer avec la partie de moule mobile 7. Le mouvement de dégagement est donc réalisé dans une direction opposée à la partie de moule mobile 7.

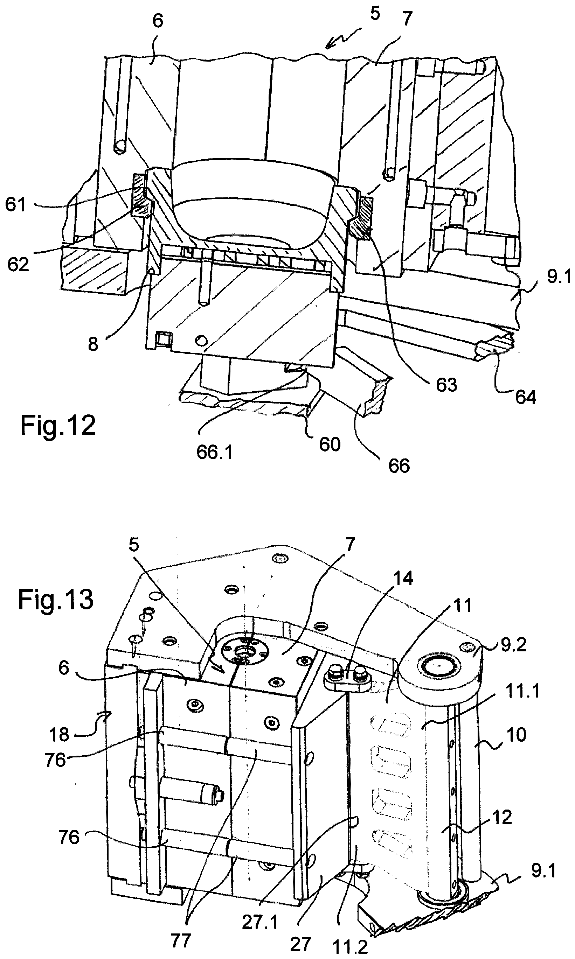

Avantageusement, comme représenté sur la figure 13, le dispositif selon l'invention comporte des butées 76, 77 s'étendant de part et d'autre des parties de moule 6, 7 pour venir en appui les unes contre les autres lorsque le moule 5 est en position de fermeture. Les butées sont ici au nombre de quatre.

Les butées 76 s'étendent de chaque côté de la partie de moule fixe 6 et sont solidaires de la platine 26. Les butées 77 s'étendent de chaque côté de la partie de moule mobile 7 et sont solidaires du support 27. Les butées 76, 77 ont ici la forme de pions cylindriques à tête plate ayant des longueurs telles que les butées 76 sont en contact avec les butées 77 lorsque le moule 5 est en position de fermeture.

Les butées sont en un matériau de dureté supérieure à la dureté du matériau, généralement de l'aluminium, utilisé pour les parties de moule 6, 7 de manière à éviter que les faces des moules ne se détériorent suite aux fermetures successives du moule.

Bien entendu, l'invention n'est pas limitée aux modes de réalisation décrits mais englobe toute variante entrant dans le champ de l'invention telle que définie par les revendications.

En particulier, les moyens de déplacement des arcs-boutants entre leurs deux positions peuvent comprendre un servomoteur au lieu d'une came.

En outre, les moyens de commande des moules dans leurs état ouvert et fermé peuvent comprendre un ou plusieurs servomoteurs au lieu des cames.

Les moyens de commande des arcs-boutants et des parties de moule mobiles peuvent être indépendants les uns des autres.

Le moule peut ne comprendre qu'une partie fixe et une partie mobile.

Les parties de moule peuvent être fixées directement sur la plateforme.

L'arc boutant peut coulisser entre ses deux positions et être reçu, dans sa position de blocage, entre la partie de moule mobile et un élément de butée solidaire de la plateforme ou d'un organe lui-même solidaire de la plateforme.

L'arc-boutant peut prendre appui directement ou indirectement, c'est-à-dire via une pièce intermédiaire, contre la partie de moule mobile.

Le fond 8 peut basculer entre ses deux positions au lieu de coulisser entre lesdites positions.

Bien que l'agencement en modules de moulage soit particulièrement intéressant ici, cet agencement est indépendant du mode de fermeture du moule et de la présence d'un arc-boutant.

Bien que le verrouillage du fond de moule soit particulièrement intéressant ici, ce verrouillage est indépendant du mode de fermeture de la partie de moule mobile 7 et de la présence d'un arc-boutant.

## Revendications

1. Dispositif de soufflage de récipients, comportant un bâti (1) et une plateforme (2) montée pour pivoter sur le bâti autour d'un axe de rotation (3), la plateforme étant pourvue d'organes de soufflage (4) et de moules (5) qui sont montés sous les organes de soufflage et qui comprennent une partie de moule fixe (6) et une partie de moule mobile (7) déplaçable en pivotement par des moyens de commande (12, 13) entre une position d'ouverture et une position de fermeture de moule, **caractérisé en ce qu'**il comprend des organes de blocage des moules en état fermé, chaque organe de blocage comprend un arc-boutant (11) qui est relié à la partie de moule mobile par au moins une biellette et qui est solidaire d'un arbre de pivotement (12) monté sur la plateforme pour être mobile entre une position escamotée et une position de blocage dans laquelle l'arc-boutant est en contact avec une surface solidaire de la partie de moule mobile, l'arbre de pivotement (12) étant positionné de telle manière qu'en position de blocage l'arc-boutant s'étende le long d'une direction d'application (F) d'une résultante d'effort de soufflage repris par la partie de moule mobile.

2. Dispositif selon la revendication 1, dans lequel l'arc boutant, la biellette, la partie de moule mobile et l'arbre de pivotement sont agencés de telle manière que l'arc-boutant soit en contact avec la surface de la partie de moule mobile au-delà d'une position d'alignement d'extrémités articulées de la bielle avec l'arbre de pivotement.

3. Dispositif selon la revendication 2, dans lequel la surface de la partie de moule mobile et la face de l'arc-boutant venant en appui de celle-ci sont inclinées pour éviter une interférence entre elles préalablement à l'arrivée en position de blocage.

4. Dispositif selon la revendication 1, dans lequel les moyens de commande comprennent un galet (16) monté sur un maneton solidaire de l'arbre de pivotement de telle manière que le galet coopère avec une came (17) fixe par rapport au bâti (1) et conformée pour amener la partie de moule mobile (7) et l'arc-boutant (11) dans leurs deux positions par l'intermédiaire des biellettes (14).

5. Dispositif selon la revendication 1, dans lequel les parties de moule (6, 7) et l'arc-boutant (11) sont montés dans un châssis (9) fixé sur la plateforme (2) .

6. Dispositif selon la revendication 1, dans lequel l'arc-boutant (11) a une hauteur sensiblement identique à une hauteur du moule (5).

7. Dispositif selon la revendication 5, dans lequel la partie de moule fixe (6) est montée sur un élément (18) de mise en appui de la partie de moule fixe contre la partie de moule mobile (7).

8. Dispositif selon la revendication 7, dans lequel l'élément de mise en appui (18) comprend un corps (19) pourvu d'une chambre recevant, à coulissement selon une direction parallèle à la direction d'application de la résultante d'effort de soufflage, un piston (21) soumis à une pression de soufflage, la partie de moule fixe (6) étant solidaire en translation du piston.

9. Dispositif selon la revendication 1, dans lequel chaque moule comprend un fond de moule mobile en translation verticale entre une position engagée entre les parties de moule et une position dégagée.

10. Dispositif selon la revendication 9, dans lequel les moyens de commande comprennent un levier de commande verticale ayant une première extrémité articulée au fond de moule, une partie intermédiaire montée pour pivoter autour d'un axe sensiblement horizontal, et une deuxième extrémité coopérant avec une came liée en rotation à l'arbre de pivotement de l'arc-boutant pour déplacer verticalement la deuxième extrémité.

11. Dispositif selon la revendication 9, dans lequel le fond de moule en position engagée est mobile horizontalement entre une position de verrouillage dans laquelle une butée du fond de moule est en engagement relatif avec une butée de la partie de moule fixe pour s'opposer à un déplacement du fond de moule en position dégagée, et une position de déverrouillage dans laquelle la butée du fond de moule échappe à la butée de la partie de moule.

12. Dispositif selon la revendication 10, dans lequel le fond de moule est monté sur un support mobile horizontalement entre la position de verrouillage et la position de déverrouillage et les moyens de commande comprennent un levier de commande horizontale ayant une première extrémité fixée au support en un point excentré de celui-ci, une partie intermédiaire montée pour pivoter autour d'un axe sensiblement vertical, et une deuxième extrémité coopérant avec une came liée en rotation à l'arbre de pivotement de l'arc-boutant pour déplacer horizontalement la deuxième extrémité.

13. Dispositif selon l'une quelconque des revendications précédentes, comportant des butées (76, 77) s'étendant de part et d'autre des parties de moule (6, 7) pour venir en appui les unes contre les autres lorsque le moule (5) est en position de fermeture.

## Patentansprüche

1. Vorrichtung zum Blasformen von Behältern, umfassend ein Gestell (1) und eine Plattform (2), die an dem Gestell drehbar um eine Rotationsachse (3) gelagert ist, wobei die Plattform mit Blaselementen (4) und mit Formen (5) ausgestattet ist, die unter den Blaselementen montiert sind und einen ortsfesten Formteil (6) und einen beweglichen Formteil (7) umfassen, der durch Steuermittel (12, 13) zwischen einer geöffneten Position und einer geschlossenen Position der Form verschwenkbar ist, **dadurch gekennzeichnet, dass** sie Blockierelemente zum Blockieren der Formen im geschlossenen Zustand umfasst, wobei jedes Blockierelement eine Strebe (11) umfasst, die mit dem beweglichen Formteil über mindestens eine Stange verbunden ist und die fest mit einer Schwenkwelle (12) verbunden ist, die an der Plattform gelagert ist, um zwischen einer eingezogenen Position und einer Blockierposition beweglich zu sein, in der die Strebe mit einer Oberfläche in Kontakt ist, die fest mit dem beweglichen Formteil verbunden ist, wobei die Schwenkwelle (12) derart positioniert ist, dass sich die Strebe in der Blockierposition entlang einer Richtung (F) erstreckt, in der eine Resultierende einer Blaskraft, die von dem beweglichen Formteil aufgenommen wird, angreift.

2. Vorrichtung nach Anspruch 1, bei der die Strebe, die Stange, der bewegliche Formteil und die Schwenkwelle derart ausgebildet sind, dass die Strebe mit der Oberfläche des beweglichen Formteils jenseits einer Position in Kontakt ist, in der die angelenkten Enden der Stange mit der Schwenkwelle ausgerichtet sind.

3. Vorrichtung nach Anspruch 2, bei der die Oberfläche des beweglichen Formteils und die Fläche der Strebe, die an dieser zur Anlage kommt, geneigt sind, um eine Störung zwischen denselben zu verhindern, ehe sie die Blockierposition erreichen.

4. Vorrichtung nach Anspruch 1, bei der die Steuermittel eine Rolle (16) umfassen, die auf einem Zapfen gelagert ist, der fest mit der Schwenkwelle verbunden ist, derart, dass die Rolle mit einem Nocken (17) zusammenwirkt, der relativ zum Gestell (1) ortsfest und so geformt ist, dass er den beweglichen Formteil (7) und die Strebe (11) über Stangen (14) in ihre beiden Positionen bringt.

5. Vorrichtung nach Anspruch 1, bei der die Formteile (6, 7) und die Strebe (11) in einem Rahmen (9) montiert sind, der an der Plattform (2) befestigt ist.

6. Vorrichtung nach Anspruch 1, bei der die Strebe (11) eine Höhe hat, die im Wesentlichen identisch zu einer Höhe der Form (5) ist.

7. Vorrichtung nach Anspruch 5, bei der der ortsfeste Formteil (6) an einem Anlageelement (18) zum Anlegen des ortsfesten Formteils an dem beweglichen Formteil (7) montiert ist.

8. Vorrichtung nach Anspruch 7, bei der das Anlegeelement (18) einen Körper (19) umfasst, der mit einer Kammer versehen ist, die gleitend in eine Richtung parallel zur Richtung des Angreifens der Resultierenden der Blaskraft einen Kolben (21) aufnimmt, der einem Blasdruck ausgesetzt ist, wobei der ortsfeste Formteil (6) translationsfest mit dem Kolben verbunden ist.

9. Vorrichtung nach Anspruch 1, bei der jede Form einen Formboden umfasst, der in vertikaler Translationsbewegung zwischen einer Eingriffsposition zwischen den Formteilen und einer Ausrückposition beweglich ist.

10. Vorrichtung nach Anspruch 9, bei der die Steuermittel einen Hebel zur vertikalen Steuerung umfassen, der ein erstes Ende hat, das am Formboden angelenkt ist, einen Zwischenteil, der drehbar um eine im Wesentlichen horizontale Achse angelenkt ist, sowie ein zweites Ende, das mit einem Nocken zusammenwirkt, der drehfest mit der Schwenkwelle der Strebe verbunden ist, um das zweite Ende vertikal zu bewegen.

11. Vorrichtung nach Anspruch 9, bei der der Formboden in der Eingriffsposition horizontal zwischen einer Verriegelungsposition, in der ein Anschlag des Formbodens in relativem Eingriff mit einem Anschlag des ortsfesten Formteils ist, um sich einer Verschiebung des Formbodens in die Ausrückposition zu widersetzen, und einer Entriegelungsposition beweglich ist, in der der Anschlag des Formbodens von dem Anschlag der Formteils freikommt.

12. Vorrichtung nach Anspruch 10, bei der der Formboden an einem Träger gelagert ist, der horizontal zwischen der Verriegelungsposition und der Entriegelungsposition beweglich ist, und die Steuermittel einen Hebel zur horizontalen Steuerung umfassen, der ein erste Ende hat, das an dem Träger an einem außermittigen Punkt desselben befestigt ist, einen Zwischenteil, der schwenkbar um eine im Wesentlichen vertikale Achse gelagert ist, sowie ein zweites Ende, das mit einem Nocken zusammenwirkt, der drehfest mit der Schwenkwelle die Strebe verbunden ist, um das zweite Ende horizontal zu bewegen.

13. Vorrichtung nach einem der vorhergehenden Ansprüche, umfassend Anschläge (76, 77), die sich zu beiden Seiten der Formteile (6, 7) erstrecken, um aneinander in Anlage zu kommen, wenn die Form (5) in der geschlossenen Stellung ist.

## Claims

1. A device for blow-molding containers, the device comprising a structure (1) and a platform (2) mounted to rotate on the structure about an axis of rotation (3), the platform being provided with blower members (4) and with molds (5) that are mounted under the blower members, each of which comprises a stationary mold portion (6) and a movable mold portion (7) that is movable in pivoting by control means (12, 13) between an open position and a closed position for the mold, the device being **characterized in that** it includes blocking members for blocking the molds in the closed state, each blocking member comprising a strut (11) that is connected to the movable mold portion by at least one link and that is secured to a pivot shaft (12) mounted on the platform to move between a retracted position and a blocking position in which the strut is in contact with a surface secured to the movable mold portion, the pivot shaft (12) being positioned in such a manner that in the blocking position the strut extends in a direction (F) along which a resultant of the blow-molding force as taken up by the movable mold portion is applied.

2. A device according to claim 1, wherein the strut, the link, the movable mold portion, and the pivot shaft are positioned in such a manner that the strut is in contact with the surface of the movable mold portion beyond a position in which the hinged ends of the link are in alignment with the pivot shaft.

3. A device according to claim 2, wherein the surface of the movable mold portion and the face of the strut pressing thereagainst are inclined in order to avoid interference between them before they reach the blocking position.

4. A device according to claim 1, wherein the control means comprise a wheel (16) mounted on a crank secured to the pivot shaft in such a manner that the wheel cooperates with a cam (17) that is stationary relative to the structure (1) and that is shaped to move the movable mold portion (7) and the strut (11) into their two positions by means of links (14).

5. A device according to claim 1, wherein the mold portions (6, 7) and the strut (11) are mounted in a frame (9) that is fastened on the platform (2).

6. A device according to claim 1, wherein the strut (11) is of a height that is substantially identical to a height of the mold (5).

7. A device according to claim 5, wherein the stationary mold portion (6) is mounted on a presser element (18) for pressing the stationary mold portion against the movable mold portion (7).

8. A device according to claim 7, wherein the presser element (18) comprises a body (19) provided with a chamber slidably receiving a piston (22) to slide in a direction parallel to the direction in which the resultant of the blow-molding force is applied, the piston (22) being subjected to blow-molding pressure and the stationary mold portion (6) being secured to move in translation with the piston.

9. A device according to claim 1, wherein each mold comprises a mold bottom movable in vertical translation between an engaged position between the mold portions and a disengaged position.

10. A device according to claim 9, wherein the control means comprise a control lever for controlling vertical movement having a first end hinged to the mold bottom, an intermediate portion mounted to pivot about a substantially horizontal axis, and a second end cooperating with a cam constrained in rotation to a pivot shaft of the strut in order to move the second end vertically.

11. A device according to claim 9, wherein the mold bottom in the engaged position is movable horizontally between a locked position in which an abutment of the mold bottom is in relative engagement with an abutment of the stationary mold portion in order to oppose movement of the mold bottom into a disengaged position, and an unlocked position in which the abutment of the mold bottom escapes from the abutment of the mold portion.

12. A device according to claim 10, wherein the mold bottom is mounted on a horizontal movable support between the locked position and the unlocked position and the control means comprise a horizontal control lever having a first end fastened to the support at an off-center point thereof, an intermediate portion mounted to pivot about a substantially vertical axis, and a second end cooperating with a cam constrained to rotate with the strut in order to move the second end horizontally.

13. A device according to any preceding claim, including abutments (76, 77) extending on either side of the mold portions (6, 7) to press against each other when the mold (5) is in the closed position.
